# EUROPEAN PATENT APPLICATION

(11) **EP 2 492 141 A2**
(43) Date of publication of application: **29.08.2012**
(21) Application number: 12156779.6
(22) Date of filing: 24.02.2012
(51) Int. Cl.: B60Q 1/14, F21V 14/08

(54) **Vehicular lamp**

(30) Priority: 28.02.2011 JP 2011042317
(71) Applicant: Koito Manufacturing Co., Ltd., Tokyo 108-8711 (JP)
(72) Inventor: Yamamura, Satoshi, Shizuoka-shi, Shizuoka (JP); Tanaka, Hidetada, Shizuoka-shi, Shizuoka (JP)
(74) Representative: Grünecker, Kinkeldey, Stockmair & Schwanhäusser

(57) **Abstract**

A lamp unit (20, 120) is provided with: a projector lens (22); a light source (24Ra, 24La) disposed behind a rear focus (F) of the projector lens (22); a reflector (26R, 26L) configured to reflect light from the light source (24Ra, 24La) to the projector lens (22); a movable shade (28, 128) configured to shield a part of the light from the reflector (26R, 26L) toward the projection lens (22) so as to form a dark portion (PA1a, PA2a) on a horizontally central area of a light distribution pattern formed by the lamp unit (20, 120); and an actuator (30, 130) configured to move the movable shade (28, 128) between a first shield position where a pair of vertical cutoff lines (CLv) are formed at right/left sides of the dark portion (PA1a) on the horizontally central area by the movable shade (28, 128) and a second shield position displaced from the first shield position in a front/rear direction.

## Description

### BACKGROUND OF THE INVENTION

### <FIELD OF THE INVENTION>

The present invention relates to a vehicular lamp and a lamp unit in the vehicular lamp.

### <RELATED ART>

There has been known a vehicular lamp configured to form a variable light distribution pattern that can change a light distribution pattern, as a light distribution pattern for a high beam, or as an additional light distribution pattern that is added for a light distribution pattern for a low beam when a light distribution pattern for a high beam is formed.

For example, Patent Document 1 discloses a vehicular lamp configured to form an additional light distribution pattern as a single light distribution pattern that is a portion of a light distribution pattern for a high beam, and as a variable light distribution pattern that can be changed into a pair of left and right separate light distribution patterns, by composing a pair of light distribution patterns generated by light irradiated from a pair of lamp units to form the additional light distribution pattern, and then swiveling each of the lamp units.
Patent Document 1: JP-A-2010-140661

Each lamp unit as described in Patent Document 1 is a projector type lamp in which light from a light source disposed behind a rear focus of a projector lens is reflected by a reflector toward the projector lens, and vertical cutoff lines are formed by disposing a shade that blocks a portion of the light reflected from the reflector at a predetermined position between the reflector and the projector lens.

When a variable light distribution pattern created by a vehicular lamp as described in Patent Document 1 is formed as a pair of left and right separate light distribution patterns, at both right/left sides (both sides in right/left direction) of a preceding vehicle traveling at the front area, it would be possible to improve the front visibility of the driver of the own vehicle without glaring on the driver of the preceding vehicle traveling at the front area.

However, since the variable light distribution pattern formed as a pair of left and right separate light distribution patterns by the vehicular lamp as described in Patent Document 1, has vertical cutoff lines that are clearly formed at both right/left sides of a horizontally central dark area (that is, a dark area in a central area in right/left direction), there are some problems as follows.

That is, since the variable light distribution pattern with the horizontally central dark area has vertical cutoff lines that are clearly formed at both right/left sides of the horizontally central dark area, it is possible to achieve a desired operational effect of improving the front visibility of the driver of the own vehicle without glaring on the driver of a preceding vehicle traveling at the front area when the own vehicle travels on a flat straight road. However, when the vehicle travels on a curved road or an intermountain road, or travels on a road that is straight, but uphill at the front area, or enters a flat road or an uphill after a downhill, the vertical cutoff lines are shined on the fences at a road shoulder, surfaces of a mountain, or the road surface at the front area of the own vehicle, thereby troubling the driver of the own vehicle.

### SUMMARY OF THE INVENTION

One or more embodiments of the invention relate to a vehicular lamp and a lamp unit in the vehicular lamp configured to form a variable light distribution pattern for a high beam which can improve a front visibility of a driver of an own vehicle without glaring on a driver of a preceding vehicle or an oncoming vehicle traveling at the front area when the own vehicle travels on a flat straight road, and does not make a trouble to the driver of the own vehicle in any other traveling situations.

### BRIEF DESCRIPTION OF THE DRAWINGS

FIG. 1 is a front view showing a vehicular lamp according to an embodiment.
FIG. 2 is a cross-sectional view taken along the line II-II of FIG. 1.
FIG. 3 is a cross-sectional view taken along the line III-III of FIG. 2.
FIGS. 4A and 4B are views showing penetratingly a light distribution pattern formed on a virtual vertical screen disposed at 25 mm ahead of the lamp by light irradiated forward from the vehicular lamp, in which FIG. 4A is a view showing a light distribution pattern for a low beam and FIG. 4B is a view showing a light distribution pattern for a high beam.
FIGS. 5A and 5B are views showing the light distribution pattern for a high beam, in which FIG. 5A is a view when a movable shade is at a first shield position and FIG. 5B is a view when the movable shade is at a second shield position, respectively.
FIG. 6 is a view showing a modified example of the embodiment, in the same way as FIG. 2.

### DETAILED DESCRIPTION OF THE EMBODIMENTS

An embodiment of the present invention will be described with reference to the accompanying drawings. Further, the embodiment and modifications thereof described herein are not intended to limit the invention but only to exemplify the invention, and all features or combinations of the features of the embodiment and/or the modifications are not always essential to the invention.

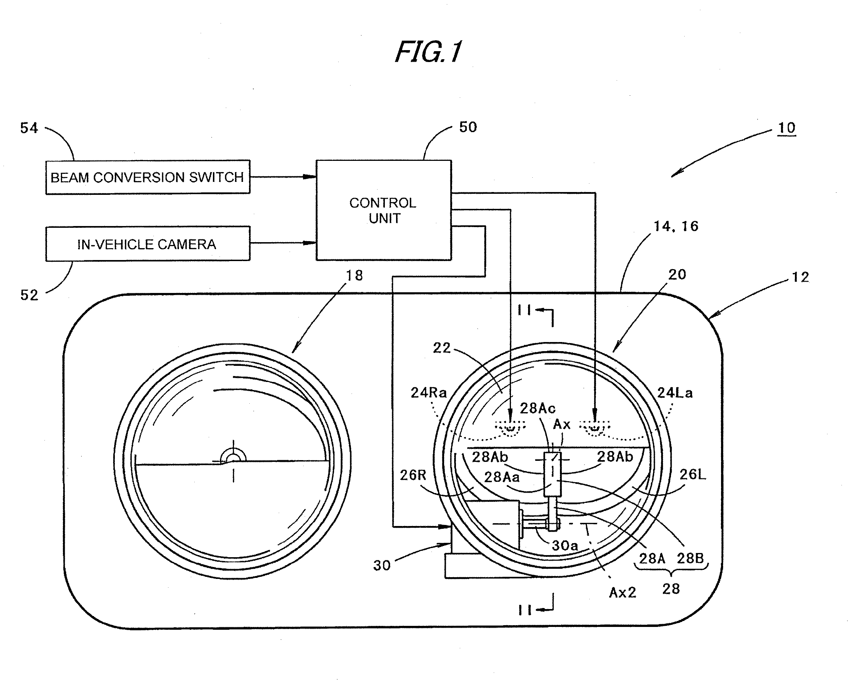

FIG. 1 is a front view showing a vehicular lamp 10 according to an embodiment of the present invention.

As shown in FIG. 1, the vehicular lamp 10 according to the present embodiment includes a lamp main body 12, a control unit 50 and an in-vehicle camera 52 that photographs the front area of the vehicle.

An image data signal taken by the in-vehicle camera 52 and a beam conversion signal for beam conversion of a low beam and a high beam from a beam conversion switch 54 are input to the control unit 50 in the vehicular lamp 10.

The lamp main body 12 has a configuration in which two lamp units 18 and 20 are accommodated in a lamp compartment. The lamp compartment is formed by a lamp body 14 and a transparent light transmitting cover 16 that is attached to the front opening of the lamp body 14.

The lamp unit 18 forms a light distribution pattern for a low beam, and is configured as a projector type lamp unit.

The lamp unit 20 forms an additional light distribution pattern added to a light distribution pattern for a low beam when forming a light distribution pattern for a high beam as a variable light distribution pattern, and is configured as a projector type lamp unit.

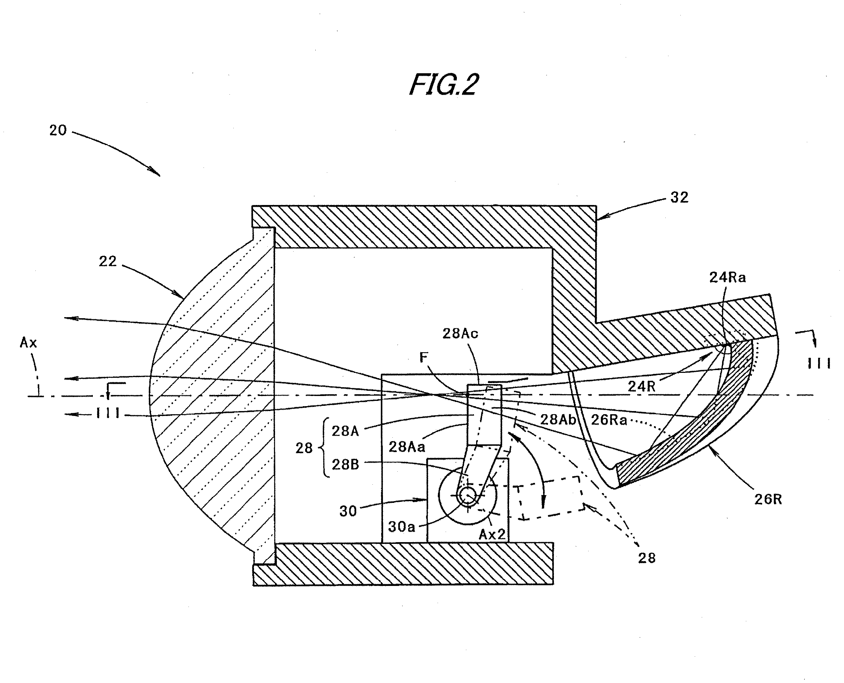

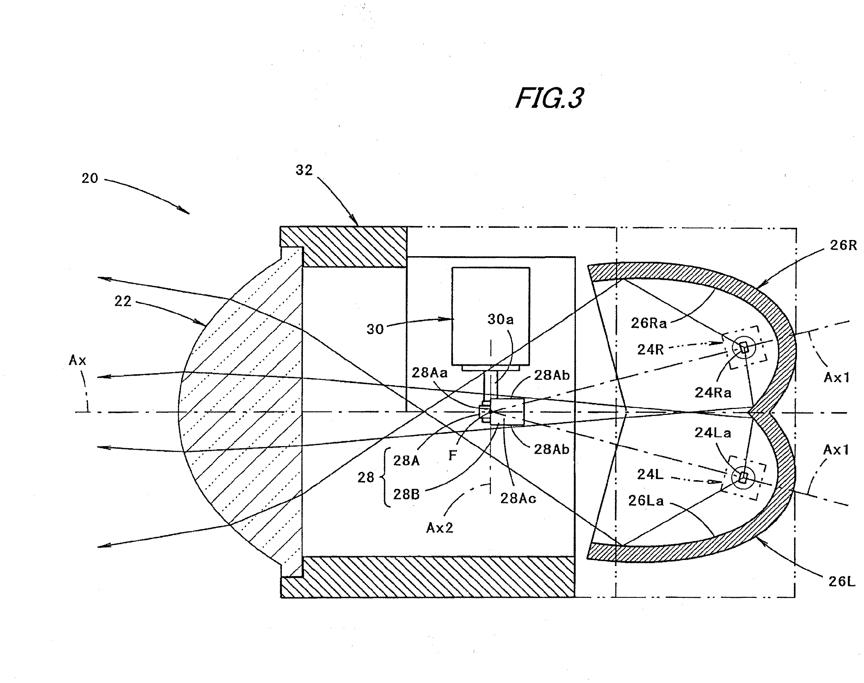

FIG. 2 is a cross-sectional view taken along the line II-II of FIG. 1, and FIG. 3 is a cross-sectional view taken along the line III-III of FIG. 2.

As shown in the figures, the lamp unit 20 includes a projector lens 22, a pair of left and right light sources 24La and 24Ra, a pair of left and right reflectors 26L and 26R, a movable shade 28, an actuator 30, and a holder 32 supporting those components.

The projector lens 22 is composed of a plane-convex aspheric lens with a convex surface at the front surface and a flat surface at the rear surface, and disposed on a light axis Ax extending in the front-rear direction of the vehicle. The projector lens 22 projects a light source image formed on a rear focus surface as a reverse image to a virtual vertical screen at the front portion of the lamp.

The pair of left and right light sources 24La and 24Ra are both light emitting chips such as white light emitting diodes 24L and 24R, and disposed bilateral symmetrically and approximately downwardly at a position spaced diagonally to right/left upwardly from the light axis Ax, behind the rear focus F of the projector lens 22.

The pair of left and right reflectors 26L and 26R covers the pair of left and right light sources 24La and 24Ra in a substantially semi-dome shape from below, and is arranged bilateral symmetrically. In this configuration, the pair of left and right reflectors 26L and 26R is integrally formed.

The reflective surfaces 26La and 26Ra of the reflectors 26L and 26R have a long axes on the axial line Ax1 extending diagonally downward toward the front of the lamp, and are formed in substantially elliptical surfaces with the first focuses at the light emitting center of the light sources 24La and 24Ra, in which the eccentricity is set to gradually increase from the vertical cross-section toward the horizontal cross-section. Accordingly, the reflectors 26L and 26R substantially collect the light from the light sources 24La and 24Ra at a front portion from the rear focus F in the vertical cross-section while moving the collection position considerably forward in the horizontal cross-section.

The pair of left and right reflectors 26L and 26R are arranged such that the axial lines Ax1 that are the central axes cross the light axis Ax around the rear focus F when seen from the above, thereby increasing light collection performance to the rear focus F of the light reflected from the reflectors 26L and 26R.

The movable shade 28 is disposed on the light path between both of the reflectors 26L and 26R and the projector lens 22, and is configured to shield the light for forming the left and right center area of the variable light distribution pattern among the reflected light from the reflectors 26L and 26R.

The movable shade 28 includes a shade main body 28A that is composed of a rectangular block having a vertically long rectangular outer shape when seen from the front of the lamp, and a lever portion 28B that extends downward and slightly forward from the lower end of the shade main body 28A. Mirror finish, such as aluminum deposition, is performed to the pair of right/left sides 28Ab of the shade main body 28A of the movable shade 28.

The movable shade 28 is connected to an output shaft 30a of the actuator 30 at the lower end of the lever portion 28B. The actuator 30 is composed of a stepping motor, and the output shaft 30a extends along a horizontal axial line Ax2 that extends along the width direction of the vehicle. The movable shade 28 is rotated around the horizontal axial line Ax2, as shown by an arrow in FIG. 2, by driving the actuator 30.

As shown in FIG. 1, the actuator 30 is driven by a driving control signal from the control unit 50 on the basis of the signals inputted from the beam conversion switch 54 and the in-vehicle camera 52. The control unit 50 also controls each of the light sources 24La and 24Ra of the lamp unit 20 to be turned ON/OFF on the basis of an input signal from the beam conversion switch 54.

By driving the actuator 30, the movable shade 28 can take a first shield position shown by a solid line, a second shield position shown by an alternate long and two short dashes line, and a light shield release position shown by an alternate long and short dash line in FIG. 2.

The shade main body 28A stands upright when the movable shade 28 is at the first shield position. In this state, the front surface 28Aa of the shade main body 28A extends along a vertical surface that is perpendicular to the light axis Ax to include the rear focus F of the projector lens 22, the pair of right/left sides 28Ab of the shade main body 28A extends along a vertical surface that is parallel with the light axis Ax at a position somewhat spaced bilaterally from the light axis Ax, and the upper end 28Ac of the shade main body 28A extends along a horizontal surface around the above of the light axis Ax.

The second shield position is set as a position where the movable shade 28 has rotated a bit rearward from the first shield position (specifically, a position rotated at about 5° to 15°).

The light shield release position is set as a position where the movable shade 28 has rotated largely rearward from the first shield position such that the light reflected from the reflectors 26L and 26R is not shielded (specifically, position rotated at about 70° to 90°).

Meanwhile, the movable shade 28 is pressed toward the first shield position around the horizontal axial line Ax2 by a spring (not shown), and accordingly, it is possible to accurately position the movable shade 28 at the first shield position.

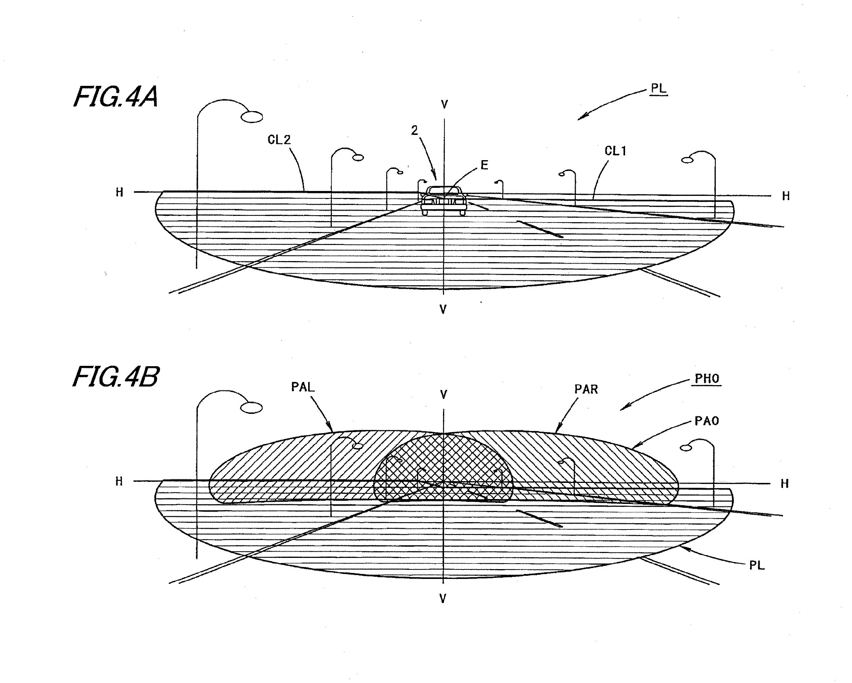

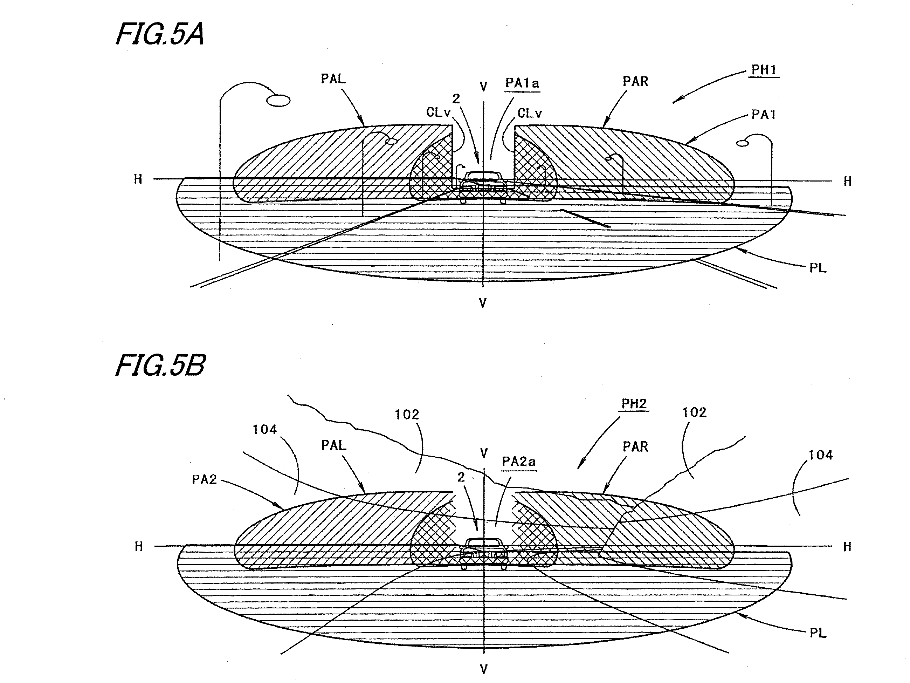

FIGS. 4 and 5 are views showing penetratingly a light distribution pattern formed on a virtual vertical screen disposed at 25 m ahead of the lamp by the light irradiated forward from the vehicular lamp 10 according to the present embodiment.

The light distribution pattern shown in FIG. 4A is a light distribution pattern PL for a low beam, and the light distribution pattern shown in FIG. 4B is a common light distribution pattern PH0 for a high beam. The light distribution patterns shown in FIGS. 5A and 5B are specific light distribution patterns PH1 and PH2 for a high beam where a portion of the light distribution pattern PH0 for a high beam is insufficient.

Each of the light distribution patterns is described hereafter.

The light distribution pattern PL for a low beam shown in FIG. 4A is a light distribution pattern formed only by the light irradiated from the lamp unit 18 (that is, in state where the light sources 24La and 24Ra of the lamp unit 20 are turned OFF), and is formed as a light distribution pattern for a low beam for the left light distribution having horizontal cutoff lines CL1 and CL2 having different right/left heights at the upper end edge.

The horizontal cutoff lines CL1 and CL2 extend horizontally with different right/left heights with respect to the line V-V as a boundary that is a vertical line passing a vanishing point H-V in the front direction of the lamp, in which the right side from the line V-V extends horizontally as the horizontal cutoff line CL1 of the opposite lane while the left side from the line V-V extends horizontally above the horizontal cutoff line CL1 as the horizontal cutoff line CL2 of the own lane. However, the end around the line V-V of the horizontal cutoff line CL2 is formed as an inclined cut-off line extending diagonally to left and upwardly at an inclination angle of 15° to the left from the intersection of the horizontal cutoff line CL1 and the line V-V.

In the light distribution pattern PL for a low beam, an elbow point E, which is the intersection of the horizontal cutoff line CL1 and the line V-V, is positioned at about 0.5° to 0.6° down from the H-V.

The light distribution pattern PL for a low beam does not glare on the driver of a preceding vehicle traveling at the front area, such that it is suitable for traveling in a city with heavy traffic.

The light distribution pattern PH0 for a high beam shown in FIG. 4B is formed as a composite light distribution pattern of the light distribution pattern PL for a low beam and an additional light distribution pattern PA0 formed by the light irradiated from the lamp unit 20. The additional light distribution pattern PA0 is an additional light distribution pattern formed when the pair of left and right light sources 24La and 24Ra is turned ON in the state that the movable shade 28 is at the light shield release position.

The additional light distribution pattern PA0 is a composite light distribution pattern of the pair of left and right light distribution patterns PAL and PAR partially overlapping each other in bilateral symmetry to the line V-V, and is formed as a transversely long light distribution pattern extending thinly and lengthily toward both right/left sides about the line V-V.

The left light distribution pattern PAL is a light distribution pattern formed by the light that is irradiated from the right light source 24Ra and is reflected from the right reflector 26R, and the right light distribution pattern PAR is a light distribution pattern formed by the light that is irradiated from the left light source 24La and is reflected from the left reflector 26L.

The light distribution patterns PAL and PAR have the lower end edges that extend substantially horizontally under the line H-H that is a horizontal line passing the H-V, and are formed so as to be convex in an substantially elliptical shape that is swelled transversely and long upwardly in the longitudinal direction at both right/left ends of the lower end edge. The lower end edges of the light distribution patterns PAL and PAR cross the line V-V at about 2° to 3° under the H-V and the upper end edges of the light distribution patterns PAL and PAR cross the line V-V at about 4° to 6° above the H-V.

A hot zone that is a high-light intensity region is positioned near the H-V where the pair of left and right light distribution patterns PAL and PAR overlaps each other, in the additional light distribution pattern PA0.

The light distribution pattern PH0 for a high beam has superior long distance visibility, such that it is suitable when there is no vehicle at the front area of the own vehicle traveling at a high velocity.

The light distribution pattern PH1 for a high beam shown in FIG. 5A is a light distribution pattern where a horizontally central area (that is, a central area in right/left direction) of the additional light distribution pattern PA0 are insufficient in comparison to the light distribution pattern PH0 for a high beam shown in FIG. 4B.

The light distribution pattern PH1 for a high beam is formed as a composite light distribution pattern of the light distribution pattern PL for a low beam and an additional light distribution pattern PA1 where a portion of the additional light distribution pattern PA0 shown in FIG. 4B is insufficient.

The additional light distribution pattern PA1 is a light distribution pattern formed when the pair of left and right light sources 24La and 24Ra is turned ON in the state that the movable shade 28 is at the first shield position indicated by the solid line in FIG. 2.

The additional light distribution pattern PA1 is a light distribution pattern formed as a dark portion PA1a with the right/left central portions cut-out in a rectangular shape from the horizontally central area in the additional light distribution pattern PA0 shown in FIG. 4B.

The dark portion PA1a is a shadow of the movable shade 28 formed at the first shield position, which is formed in a left-right width of about 4° to 6° from the line V-V. The lower end edge of the dark portion PA1a horizontally extends under the line H-H because the upper end 28Ac of the shade main body 28A of the movable shade 28 is formed as a horizontal surface around and above the light axis Ax. The right/left edges of the dark portion PA1a are formed as clear vertical cutoff lines CLv vertically extending at the right/left sides of the line V-V, because the pair of right/left sides 28Ab of the shade main body 28A are formed in a vertical surface and the front end edges are positioned on the rear focus surface of the projector lens 22.

In the light distribution pattern PH1 for a high beam having the additional light distribution pattern PA1 with the dark portion PA1a, it is possible to improve the front visibility of the driver of the own vehicle without glaring on the driver of a preceding vehicle 2 traveling at the front area.

In particular, since a mirror finish is applied to the pair of right/left sides 28Ab of the shade main body 28A of the movable shade 28, the additional light distribution pattern PA1 is very bright at the areas around the right/left sides of the dark portion PA1a by a light that directly reaches the projector lens 22 after reflecting from the reflectors 26L and 26R and a light that is regularly reflected from the side 28Ab of the shade main body 28A to reach the projector lens 22 after reflecting from the reflectors 26L and 26R. Therefore, it is possible to sufficiently increase the long distance visibility of the driver of the own vehicle.

Since the light distribution pattern PH1 for a high beam can improve long distance visibility of the driver of the own vehicle without glaring on the driver of a preceding vehicle traveling at the front area, it is suitable for a case where there is a preceding vehicle 2 traveling at the front area and the own vehicle travels on a flat straight road.

The light distribution pattern PH2 for a high beam shown in FIG. 5B, similar to the light distribution pattern PH1 for a high beam shown in FIG. 5A, is also a light distribution pattern where the horizontally central area of the additional light distribution pattern PA0 are insufficient in comparison to the light distribution pattern PH0 for a high beam shown in FIG. 4B.

The light distribution pattern PH2 for a high beam is also formed as a composite light distribution pattern of the light distribution pattern PL for a low beam and an additional light distribution pattern PA2 where a portion of the additional light distribution pattern PA0 shown in FIG. 4B is insufficient.

The additional light distribution pattern PA2 is a light distribution pattern formed when the pair of left and right light sources 24La and 24Ra is turned ON in a state that the movable shade 28 is at the second shield position indicated by the alternate long and two short dashes line in FIG. 2.

The additional light distribution pattern PA2, similar to the additional light distribution pattern PA1 shown in FIG. 5A, is also a light distribution pattern where a rectangular dark portion PA2a is formed in the horizontally central area.

The dark portion PA2a is the shadow of the movable shade 28 that is at the second shield position, which is formed in a left-right width of about 4° to 6° from the line V-V. The dark portion PA2a is formed in substantially the same as the dark portion PA1a of the additional light distribution pattern PA1 shown in FIG. 5A, and since the movable shade 28 is at the second shield position which is displaced behind the first shield position, the interfaces of the lower end edge and the right/left edges of the dark portion PA2a are obscure.

The light distribution pattern PH2 for a high beam is suitable for a case where there is a preceding vehicle 2 traveling at the front area while the own vehicle travels on a curved road or an intermountain road. This is because of the following reasons.

That is, when the own vehicle travels with the light distribution pattern PH1 for a high beam shown in FIG. 5A on the intermountain road, the right/left edges of the dark portion PA1a are formed as the clear vertical cutoff lines CLv in the additional light distribution pattern PA1, such that the edges are imaged on the surface 102 of a mountain or a retaining wall 104 at the front area of the own vehicle shown in FIG. 5B, and, as a result, the driver of the own vehicle is troubled.

In this viewpoint, when the vehicle travels with the light distribution pattern PH2 for a high beam on the intermountain road, the interfaces of the right/left edges of the dark portion PA2a in the additional light distribution pattern PA2 become obscure, such that the long distance visibility is somewhat reduced in comparison to the light distribution pattern PH1 for a high beam, but contrast of light and darkness is not generated on the surface 102 of the mountain or the retaining wall 104 at the front area of the own vehicle due to the light irradiated from the vehicular lamp 10, such that the driver of the own vehicle is not troubled.

The operational effect of the embodiment is described next.

The vehicular lamp 10 according to the present embodiment includes the lamp unit 20 that forms the additional light distribution pattern PA0 as a variable light distribution pattern for a high beam, and the lamp unit 20, as a projector type lamp unit 20, is equipped with the movable shade 28 shielding light for forming the horizontally central area of the additional light distribution pattern PA0 in the light reflected from the reflectors 26L and 26R. The lamp unit 20 includes the actuator 30 that moves the movable shade 28 between the first shield position, where a pair of vertical cutoff lines CLv is formed at the right/left sides of the horizontally central area that is implemented by the dark portion PA1a by the movable shade, and the second shield position behind the first shield position. The actuator 30 is driven by the control unit 50 that is a light distribution control module in accordance with the terrain shape at the front area of the vehicle which is detected by the in-vehicle camera 52 that is a detecting module, such that the following operational effects can be achieved.

That is, as the actuator 30 is driven by the control unit 50 and the movable shade 28 is moved to the first shield position, the pair of vertical cutoff lines CLv can be formed at the right/left sides of the horizontally central area that is the dark portion PA1a in the additional light distribution pattern PA1 that is a variable light distribution pattern. Accordingly, when the own vehicle travels on a flat straight road, it is possible to improve the front visibility of the driver of the own vehicle without glaring on the driver of a preceding vehicle traveling at the front area of the own vehicle.

In particular, since mirror finish is applied to the pair of right/left sides 28Ab of the shade main body 28A of the movable shade 28, it is possible to brighten the area positioned around the right/left sides of the dark portion PA1a of the additional light distribution pattern PA1, and accordingly, it is possible to sufficiently improve the long distance visibility of the driver of the own vehicle.

As the actuator 30 is driven by the control unit 50 and the movable shade 28 is moved to the second shield position, it is possible to make the interfaces between the dark portion PA2a and the right/left bright portions of the dark portion PA2a obscure in the additional light distribution patterns PA2 that is a variable light distribution pattern. Accordingly, when the own vehicle travels on a curved road or an intermountain road and even if the own vehicle travels on a straight road with an uphill at the front area or enters a flat road or an uphill from a downhill, the vertical cutoff lines CLv are prevented from disappearing in the surface 102 of a mountain or the retaining wall 104 at the road shoulder or the road surface at the front area of the vehicle, such that the driver of the own vehicle cannot be troubled.

According to the present embodiment described above, in the vehicular lamp 10 that form the variable light distribution patterns PA0, PH1, and PH2 for a high beam, when the own vehicle travels on a flat straight road, it is possible to improve the front visibility of the driver of the own vehicle without glaring on the driver of a preceding vehicle traveling at the front area of the own vehicle while it is possible to prevent the driver of the own vehicle from being troubled under the other traveling situations.

In the present embodiment, since the detecting module that detects the terrain shape at the front area of the own vehicle is implemented by the in-vehicle camera 52 that photographs the front area of the vehicle, it is possible to understand the terrain shape at the front area of the vehicle as photograph data in a shape close to the sense of sight of the driver of the own vehicle. Therefore, the control of driving the actuator 30 by the control unit 50 can be more appropriately performed.

In the present embodiment, since the actuator 30 can move the movable shade 28 to the light shield release position where the shielding of the light reflected from the reflectors 26L and 26R is released, it is possible to form the additional light distribution pattern PA0 added to the light distribution pattern PL for a low beam when forming the common light distribution pattern PH0 for a high beam after ensuring the operational effect.

A modified example of the embodiment is described hereafter.

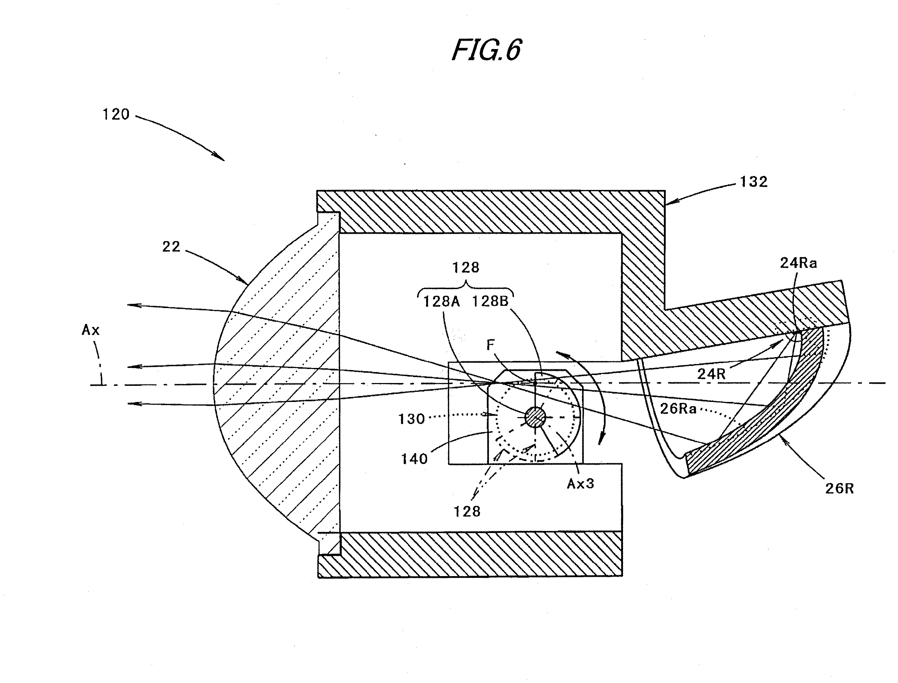

FIG. 6 is a view showing a lamp unit 120 according to the modified example, similar to FIG. 2.

The lamp unit 120 is the same in the basic configuration as the lamp unit 20 according to the embodiment, but a movable shade 128 and the supporting structure thereof are different from those of the embodiment.

That is, the movable shade 28 according to the embodiment is implemented by a lever-shaped member with the lower end fixed to the output shaft 30a of the actuator 30, but the movable shade 128 according to the modified example is implemented by a rotary shaft member disposed along the horizontal axial line Ax3 extending in the width direction of the vehicle, under the rear focus F of the projector lens 22 to be rotatable about the horizontal axial line Ax3.

In this configuration, the movable shade 128 has a shaft portion 128A that extends along the horizontal axial line Ax3 and an arc-shaped protrusion 128B that protrudes in the diameter direction with respect to the horizontal axial line Ax3 from the shaft portion 128A. The movable shade 128 is rotatably supported to a bracket 140 fixed to a holder 132, at both ends of the shaft portion 128A. The movable shade 128 is driven by the actuator 130 fixed to the bracket 140 to take a first shield position represented by a solid line, a second shield position represented by an alternate long and two short dashes line, and a light shield release position represented by an alternate long and short dash line in FIG. 6.

In the present modified example, as the movable shade 128 moves to each of the first shield position, the second shield position, and the light shield release position, additional light distribution patterns, such as the additional light distribution patterns PA0, PA1, and PA2 that are formed when the movable shade 28 in the embodiment moves to the first shield position, the second shield position, and the light shield release position, respectively, are formed as variable light distribution patterns.

It is also possible to achieve the similar operational effects to the embodiment as described above, when the configuration of the present modified example is employed.

In the embodiment and the modified example, although a case where the second shield position is set behind the first shield position is described, other case where the second shield position is set ahead of the first shield position may be possible, and in the other case, it is also possible to achieve the similar operational effects to the embodiment and the modified example as described above.

In the embodiment and the modified example as described above, although it is described that the lamp units 20L and 20R are each equipped with the pair of left and right light sources 24La and 24Ra and the pair of left and right reflectors 26L and 26R, the lamp units 20L and 20R may be equipped with a single light source and a single reflector.

In the embodiment and the modified example as described above, although it is described that the pair of left and right light sources 24La and 24Ra of the lamp units 20L and 20R are the light emitting chips such as the white light emitting diodes 24L and 24R, it is possible to achieve the similar operational effects to the embodiment and the modified example as described above even if a light emitting element of a discharged bulb is used as the light source.

In the embodiment and the modified example as described above, although the lamp unit 18 of the vehicular lamp units 10 forms the light distribution pattern for a low beam of the left light distribution as the light distribution pattern PL for a low beam, it is possible to achieve the similar operational effects by employing the configuration of the embodiment and the modified example described above even if the light distribution pattern for a low beam of the right light distribution is formed.

Meanwhile, the values provided as the specifications in the embodiment and the modified example are just examples and may be appropriately set to as other values.

In accordance with the above embodiments and the modified examples, a lamp unit 20, 120 may include: a projector lens 22; a light source 24Ra, 24La disposed behind a rear focus F of the projector lens 22; a reflector 26R, 26L configured to reflect light from the light source 24Ra, 24La to the projector lens 22; a movable shade 28, 128 configured to shield a part of the light from the reflector 26R, 26L toward the projection lens 22 so as to form a dark portion PA1a, PA2a on a horizontally central area of a light distribution pattern formed by the lamp unit 20, 120; and an actuator 30, 130 configured to move the movable shade 28, 128 between: a first shield position where a pair of vertical cutoff lines CLv are formed at right/left sides of the dark portion PA1a on the horizontally central area by the movable shade 28, 128; and a second shield position displaced from the first shield position in a front/rear direction.

In the above structure, although the "light source" is disposed behind the rear focus of a projector lens, the meaning, "disposed behind a rear focus" includes not only a case where it is geometrically disposed behind the rear focus, but also other case where it is optically disposed behind the rear focus (that is, the case where a mirror is disposed on a light path and a virtual light source, such as a mirror image, is disposed behind the rear focus).

The detailed configuration of the "movable shade", such as the shape, size or movement features, is not specifically limited, as long as it can move between the first shield position and the second shield position.

The "vertical cutoff line" implies a cutoff line extending into a direction that crosses the horizontal direction, and it may not necessarily vertically extend.

In the above structure, the lamp unit 20, 120 is configured to form a variable light distribution pattern for a high beam.

The "variable light distribution pattern for a high beam" may be a light distribution pattern for a high beam itself, which can change the shape of the light distribution pattern, or an additional light distribution pattern added to a light distribution pattern for a low beam when forming a light distribution pattern for a high beam, which can change the shape of the light distribution pattern.

In the above structure, interfaces between the dark portion PA2a on the horizontally central area and bright portions in both right and left sides of the dark portion PA2a are made to be obscure by positioning the movable shade 28, 128 in the second position.

In addition, in accordance with the above embodiments and the modified examples, a vehicular lamp 10 may include: the lamp unit 20, 120 according to the above structure,; a detecting module 52 configured to detect a terrain shape of a front area of a vehicle; and a light distribution control module 50 configured to perform a light distribution control of the lamp unit 20, 120. The light distribution control module 50 may drive the actuator 30, 130 in accordance with the terrain shape detected by the detecting module 50.

The information for detecting the terrain shape at the front area of the vehicle by the "detecting module" may use, but not specifically limited to, the view of the front area of the vehicle which is taken by an in-vehicle camera, position information of a navigation device, or a steering angle.

According to the above structure, by driving the actuator using the light distribution control module to move the movable shade to the first shield position, a pair of vertical cutoff lines can be formed at the right/left sides of the horizontally central area that is the dark portion in the variable light distribution pattern. Accordingly, when a own vehicle travels on a flat straight road, it is possible to improve the front visibility of the driver of the own vehicle without glaring on the driver of a preceding vehicle traveling at the front area.

Further, by driving the actuator using the light distribution control module to move the movable shade to the second shield position, it is possible to obscure the interfaces between the horizontally central area that is the dark portion and the bright portions at the right/left sides thereof in the variable light distribution pattern. Accordingly, when the own vehicle travels on a curved road or an intermountain road, or travels on a road that is straight, but with an uphill at the front area, or enters a flat road or an uphill after a downhill, the vertical cutoff lines are prevented from being shined on the fences at a road shoulder, surfaces of a mountain, or the road surface at the front area of the vehicle, such that the driver of the own vehicle cannot be troubled.

As a result, the vehicular lamp according to the embodiments and the modified examples can improve the front visibility of the driver of the own vehicle without glaring on the driver of the preceding vehicle traveling at the front area when the own vehicle travels on a flat straight road while preventing the driver of the own vehicle from being troubled in any other traveling situations.

In the above configuration, when the detecting module is implemented by an in-vehicle camera that photographs the front area of the vehicle, it is possible to understand the terrain shape at the front area of the vehicle as photograph data in a form close to the sense of sight of the driver of the own vehicle. Therefore, the control of driving the actuator by the light distribution control module can be more appropriately performed.

In the above configuration, when the actuator is configured to move the movable shade to the light shield release position where the shielding of the reflected light from the reflectors is released, it is possible to form an additional light distribution pattern added to a light distribution pattern for a low beam when forming a common light distribution pattern for a high beam or forming a common light distribution pattern for a high beam, after ensuring the above operational effect.

## Claims

1. A lamp unit (20, 120) comprising:
a projector lens (22);
a light source (24Ra, 24La) disposed behind a rear focus (F) of the projector lens (22);
a reflector (26R, 26L) configured to reflect light from the light source (24Ra, 24La) to the projector lens (22);
a movable shade (28, 128) configured to shield a part of the light from the reflector (26R, 26L) toward the projection lens (22) so as to form a dark portion (PA1a, PA2a) on a horizontally central area of a light distribution pattern formed by the lamp unit (20, 120); and
an actuator (30, 130) configured to move the movable shade (28, 128) between:
a first shield position where a pair of vertical cutoff lines (CLv) are formed at right/left sides of the dark portion (PA1a) on the horizontally central area by the movable shade (28, 128); and
a second shield position displaced from the first shield position in a front/rear direction.

2. The lamp unit (20, 120) according to claim 1, wherein the actuator (30, 130) is configured to move the movable shade (28, 128) to a light shield release position where shielding of the light reflected from the reflectors is released, in addition to the first shield position and the second shield position.

3. The lamp unit (20, 120) according to claim 1 or 2, wherein interfaces between the dark portion (PA2a) on the horizontally central area and bright portions in both right and left sides of the dark portion (PA2a) are made to be obscure by positioning the movable shade (28, 128) in the second position.

4. A vehicular lamp (10) comprising:
the lamp unit (20, 120) according to any one of claims 1 to 3;
a detecting module (52) configured to detect a terrain shape of a front area of a vehicle; and
a light distribution control module (50) configured to perform a light distribution control of the lamp unit (20, 120),
wherein the light distribution control module (50) is configured to drive the actuator (30, 130) in accordance with the terrain shape detected by the detecting module (50).

5. The vehicular lamp (10) according to claim 4, wherein the lamp unit (20, 120) is configured to form a variable light distribution pattern for a high beam.

6. The vehicular lamp (10) according to claim 4 or 5, wherein the detecting module is an in-vehicle camera (52) that photographs the front area of the vehicle.
